(19) **Europäisches Patentamt**
**European Patent Office**
**Office européen des brevets**

(11) Veröffentlichungsnummer: **0 154 219**
**B1**

(12) # EUROPÄISCHE PATENTSCHRIFT

(45) Veröffentlichungstag der Patentschrift:
**17.11.88**

(51) Int. Cl.⁴: **H 04 N 5/64**

(21) Anmeldenummer: **85101540.4**

(22) Anmeldetag: **13.02.85**

(54) Vorrichtung zur stereophonen Tonwiedergabe in einem Fernsehempfangsgerät.

(30) Priorität: **14.02.84 DE 3405128**

(43) Veröffentlichungstag der Anmeldung:
**11.09.85 Patentblatt 85/37**

(45) Bekanntmachung des Hinweises auf die Patenterteilung:
**17.11.88 Patentblatt 88/46**

(84) Benannte Vertragsstaaten:
**DE FR GB IT SE**

(56) Entgegenhaltungen:
**DE - A - 3 317 518**
**DE - C - 969 637**
**FR - A - 2 081 600**
**US - A - 3 086 078**

(73) Patentinhaber: **Nokia Graetz Gesellschaft mit beschränkter Haftung, Östliche Karl Friedrich Strasse 132, D-7530 Pforzheim (DE)**

(72) Erfinder: **Puls, Bernhard, Waldringstrasse 22, D-8446 Mitterfels (DE)**

## Beschreibung

Die Erfindung betrifft eine Vorrichtung zur stereophonen Tonwiedergabe in einem Fernsehempfangsgerät mit einer im Inneren des Fernsehempfangsgeräte-Gehäuses angeordneten geschlossenen Lautsprecherbox.

Eine solche Vorrichtung ist bekannt (DE-C-31 28 462). Bei der bekannten Vorrichtung handelt es sich um eine an den Seitenteilen im Inneren eines Fernsehempfangsgeräte-Gehäuses derart anbringbare geschlossene Lautsprecherbox, daß die Membran des in ihr angeordneten Tiefton-Lautsprecherchassis seitlich abstrahlt und welche eine Öffnung besitzt, die mit jeweils einer Öffnung im Frontteil des Gehäuses in Verbindung steht.

Diese bekannte Vorrichtung ist bereits in größerem Umfang verwendet worden und hat sich auch bewährt. Sie weist jedoch zunächst den Nachteil auf, daß jeweils zwei Stück bei der Herstellung eines für die stereophone Tonwiedergabe ausgerüsteten Fernsehempfangsgerätes notwendig sind, welches einerseits einen höheren Materialaufwand und andererseits einen höheren Montageaufwand erfordert. Außerdem ist es nachteilig, daß die bekannte Vorrichtung bei gleichen Abmessungen wegen der unterschiedlichen Größe und Anordnung der elektronischen Empfangsschaltungen bei verschiedenen Empfangsgerätetypen des gleichen Herstellers oder verschiedener Hersteller nur für eine oder wenige Gerätetypen verwendbar ist. Die gleiche Vorrichtung ist bei anderen Geräten nur mit anderen Abmessungen verwendbar.

Der Erfindung liegt daher die Aufgabe zugrunde, eine Vorrichtung zur Tonwiedergabe in einem Fernsehempfangsgerät zu schaffen, welche bei einer größeren Anzahl von Fernsehempfangsgerätetypen verwendet und in einfacher Weise montiert werden kann.

Diese Aufgabe ist erfindungsgemäß dadurch gelöst, daß wenigstens die zur Wiedergabe des unteren NF-Frequenzbandes erforderlichen Lautsprecher und die Frequenzweichen in einem einzigen, langgestreckt quaderförmigen, erforderlichenfalls an die Form des Bildröhrenkonus angepaßten Kasten angeordnet sind, der oberhalb der Bildröhre in der oberen Hälfte des Fernsehempfangsgeräte-Gehäuses anbringbar ist.

Die neue Vorrichtung ist derart gestaltet, daß sie im Fernsehempfangsgeräte-Gehäuse in dem bei den meisten Fernsehempfangsgeräten nicht genutzten Raum oberhalb der Bildröhre untergebracht werden kann. Es dürfte somit ausreichen, für jeden Bildröhrentyp eine passende Vorrichtung herzustellen. Dies ist besonders wirtschaftlich, weil die Anzahl der verwendeten Bildröhrentypen verhältnismäßig gering ist. Außerdem läßt sich die neue Vorrichtung in einfacher Weise und kostengünstig montieren.

Vorteilhafte Ausgestaltungen der Erfindung sind in den Ansprüchen 2 und 3 enthalten. Sie ist nachstehend anhand von in den Figuren 1 bis 4 gezeigten Ausführungsbeispielen näher erläutert. Es zeigen:

Fig. 1 die Draufsicht auf die offene Rückseite eines Fernsehempfangsgerätes, in dem eine Ausführungsform der erfindungsgemäßen Vorrichtung angeordnet ist,

Fig. 2 den Schnitt durch das Fernsehempfangsgerät gemäß Fig. 1 entlang der Linie AA,

Fig. 3 die Draufsicht auf die offene Rückseite eines Fernsehempfangsgerätes, in dem eine andere Ausführungsform der erfindungsgemäßen Vorrichtung angeordnet ist und

Fig. 4 den Schnitt durch das Fernsehempfangsgerät gemäß Fig. 3 entlang der Linie BB.

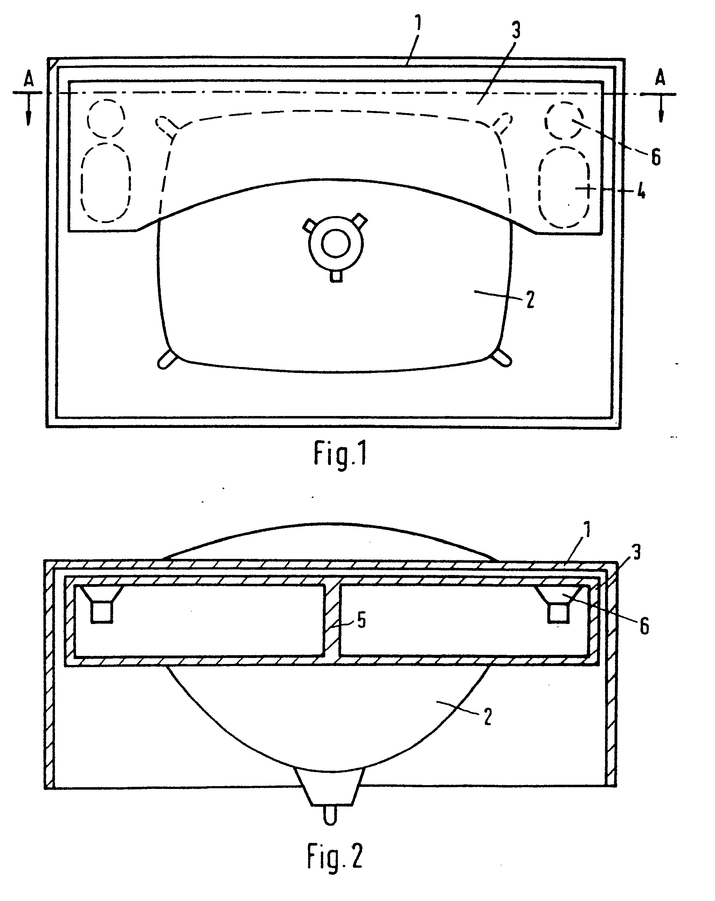

In der Fig. 1 ist das Fernsehempfangsgeräte-Gehäuse 1 zu erkennen, in dem die Bildröhre 2 befestigt ist. Oberhalb der Bildröhre 2 ist der Kasten 3 angeordnet. Fig. 2 verdeutlicht, daß der Kasten 3 durch die Trennwand 5 in zwei gleiche Volumina unterteilt ist und in seinem der Frontseite des Fernsehempfangsgerätes zugewandten Seite die Lautsprecher, im vorliegenden Ausführungsbeispiel je ein Hochtonlautsprecher 6 und ein Mittel-Tieftonlautsprecher 4, angeordnet sind. In dem Kasten sind zweckmäßigerweise auch die – nicht gezeigten – Weichen angeordnet. Bei dem aus den Figuren 1 und 2 gezeigten Ausführungsbeispiel ist der Kasten 3 derart gestaltet, daß zwei allseitig geschlossene Lautsprecherboxen in einem einstückigen Körper vereint sind. Es ist für die Erfindung jedoch nicht wesentlich, welche Art von Lautsprecherbox entsteht, sondern daß der Kasten derart gestaltet ist, daß er in dem Raum oberhalb der Bildröhre 2 anzuordnen ist.

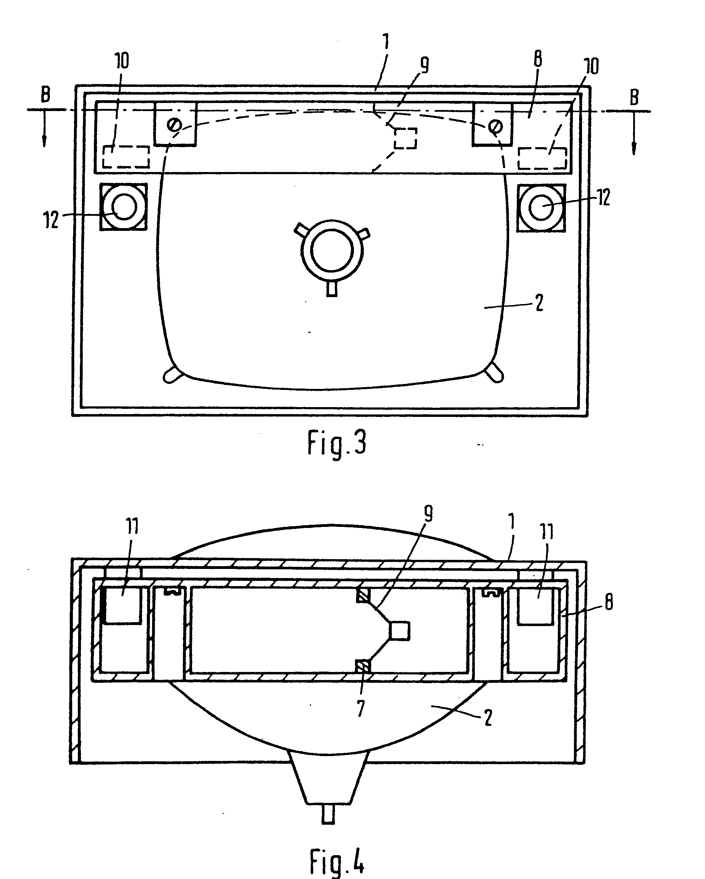

Bei dem aus den Figuren 3 und 4 ersichtlichen Ausführungsbeispiel ist der Kasten 8 wesentlich flacher als der Kasten 3. Bei diesem Ausführungsbeispiel soll der Kasten 8 auch nur die zur Abstrahlung der tiefen Frequenzen erforderlichen Mittel enthalten. Dazu ist einerseits in der Trennwand 7 der Tieftonlautsprecher 9 angeordnet. Bei dem Tieftonlautsprecher kann es sich auch um einen Lautsprecher mit zwei Schwingspulen handeln, oder es können auch zwei Lautsprecher in der Trennwand 7 befestigt sein, denen die Tieftonsignale der zwei Stereokanäle zugeführt werden. Andererseits ist die der Frontseite des Fernsehempfangsgerätes zugewandte Seite des Kastens 8 rechts und/oder links mit der Öffnung 10 (Fig. 3) versehen. In diese Öffnungen 10 sind jeweils Rohre 11 (Fig. 4) angeordnet, welche jeweils eine Verbindung zwischen dem Volumen im Kasten 8 und dem Volumen außerhalb des Fernsehempfangsgeräte-Gehäuses 1 darstellen. Die Wirkungsweise dieser Anordnung ist in der DE-A-33 17 518 beschrieben. Zur Wiedergabe der hohen und mittleren Frequenzen sind bei diesem Ausführungsbeispiel getrennte Lautsprecher 12 vorgesehen.

Bezugszeichenliste
1 Fernsehempfangsgeräte-Gehäuse
2 Bildröhre
3 Kasten
4 Mittel-Tieftonlautsprecher
5 Trennwand
6 Hochtonlautsprecher
7 Trennwand
8 Kasten
9 Tieftonlautsprecher

3  0 154 219  4

10 Öffnung
11 Rohr
12 Lautsprecher

**Patentansprüche**

1. Vorrichtung zur stereophonen Tonwiedergabe in einem Fernsehempfangsgerät mit einer im Inneren des Fernsehempfangsgeräte-Gehäuses angeordneten geschlossenen Lautsprecherbox, dadurch gekennzeichnet, daß wenigstens die zur Wiedergabe des unteren NF-Frequenzbandes erforderlichen Lautsprecher und die Frequenzweichen in einem einzigen, langgestreckt quaderförmigen, erforderlichenfalls an die Form des Bildröhrenkonus angepaßten Kasten (3, 8) angeordnet sind, der oberhalb der Bildröhre (2) in der oberen Hälfte des Fernsehempfangsgeräte-Gehäuses (1) anbringbar ist.

2. Vorrichtung nach Anspruch 1, dadurch gekennzeichnet, daß das Volumen des Kastens durch eine Trennwand (5) in zwei gleichgroße Volumina unterteilt ist.

3. Vorrichtung nach Anspruch 1, dadurch gekennzeichnet, daß das Volumen des Kastens (8) durch eine Trennwand (7) in zwei unterschiedlich große Volumina unterteilt, in der Trennwand (7) wenigstens ein Tiefton-Lautsprecherchassis (9) angeordnet und in wenigstens einem der Teilvolumina in der der Frontseite des Fernsehempfangsgerätes zugewandten Seite des Kastens eine Öffnung (10) vorgesehen ist, welche über ein Rohr (11) mit dem das Fernsehempfangsgerät umgebenden Außenraum in Verbindung steht.

**Claims**

1. Equipment for stereophonic sound reproduction in a television receiver comprising a closed loudspeaker enclosure unit disposed inside the television receiver cabinet, characterized in that at least the loudspeakers required for reproducing the low frequency band as well as the frequency crossover networks are accommodated in a single elongated, parallelepiped box-shaped enclosure (3, 8) which, if necessary, is adapted to the shape of the cone of the picture tube, this enclosure being capable of being mounted in position above the picture tube (2) in the upper half of the television receiver cabinet (1).

2. An equipment as claimed in Claim 1, characterized in that the volume of the box-shaped enclosure is divided into two equally large volumes by a partition wall (5).

3. An equipment as claimed in Claim 1, characterized in that the volume of the box-shaped enclosure (8) is divided by a partition wall (7) into two volumes of different sizes, that in said partition wall (7) there is disposed at least one woofer chassis (9) and that in at least one of the partial volumes in the side of the box-shaped enclosure facing the front side of the television receiver there is provided a port opening (10) which, via a duct tube (11), is in connection with the outer space surrounding the television receiver.

**Revendications**

1. Arrangement pour la reproduction stéréophonique des sons dans un récepteur de télévision avec un boîtier de haut-parleurs clos, agencé à l'intérieur du boîtier du récepteur de télévision, caractérisé en ce que, au moins les hauts-parleurs nécessaires pour la reproduction de la bande inférieure des audiofréquences et les filtres d'aiguillage sont disposés dans un unique coffret (3, 8) quadrangulaire, allongé et adapté, autant que de besoin, à la forme du tube image, qui est ajouté au dessus du tube image (2) dans la moitié supérieure du boîtier du récepteur de télévision (1).

2. Arrangement conforme à la revendication 1, caractérisé en ce que le volume du coffret est divisé en deux volumes égaux par une paroi de séparation (5).

3. Arrangement conforme à la revendication 1, caractérisé en ce que le volume du coffret est divisé en deux volumes différents par une paroi de séparation (7), dans lesquels un chassis de haut-parleur à audiofréquences (9) au moins est agencé dans la paroi de séparation (7) et dans lesquels, dans un des volumes partiels au moins est prévue une ouverture (10) dans la face du coffret tournée vers la face frontale du boîtier du récepteur de télévision, laquelle, par un tube (11) est connectée à l'espace extérieur entourant le récepteur de télévision.

3

**Fig.1**

**Fig.2**

Fig.3

Fig.4